# EUROPÄISCHE PATENTSCHRIFT

(11) **EP 0 306 589 B1**
(45) Veröffentlichungstag und Bekanntmachung des Hinweises auf die Patenterteilung: **03.03.1993**
(21) Anmeldenummer: 87730103.6
(22) Anmeldetag: 09.09.1987
(51) Int. Cl.: B41J 29/02, F16C 23/10

(54) **Paralleleinstellvorrichtung für eine Druckkopfschlittenführung zu einem Druckwiderlager in Druckern, insbesondere in Matrixdruckern**
Device for parallel justification of print head carriage guides relative to the platen in a printer, particularly in a matrix printer
Dispositif d'ajustement parallèle pour guider le chariot de têtes d'impression en relation avec l'appui dans une imprimante, notamment dans une imprimante en matrice

(43) Veröffentlichungstag der Anmeldung: 15.03.1989
(73) Patentinhaber: MANNESMANN Aktiengesellschaft, 40027 Düsseldorf (DE)
(72) Erfinder: Beck, Dieter, D-7907 Setzingen (DE); Bischof, Stefan, D-7900 Ulm-Jungingen (DE); Steppe, Erich, D-7900 Ulm (DE)
(74) Vertreter: Meissner, Peter E., Dipl.-Ing.

(56) Entgegenhaltungen:
- DE-A- 2 244 750
- DE-A- 3 026 323
- GB-A- 733 277
- JP-A-60 154 091
- US-A- 3 960 256
- PATENT ABSTRACTS OF JAPAN, Band 5, Nr. 112, 21. Juli 1981 (M-79)(784); JP - A - 56 052 622 (E. ISHIKAWA) 11.05.1981

## Beschreibung

Die Erfindung betrifft eine Paralleleinstellvorrichtung für eine Druckkopfschlittenführung zu einem Druckwiderlager in Druckern, insbesondere in Matrixdruckern, gemäß dem Oberbegriff des Patentanspruchs 1.

Derartige Paralleleinstellvorrichtungen für eine Druckkopfschlittenführung dienen dem Zweck, den Abstand des Druckkopfes auf der vollen Länge des Druckweges, die etwas kurzer ist als die Länge des Druckwiderlagers gleich groß zu halten, was zumindest fur flache Druckwiderlager von Bedeutung ist. Andererseits muß die Druckkopfbewegung stets auf derselben Höhe des Druckkopfes während des Druckpasses, d.h. während des vollen Druckweges, bleiben, um eine schräge Zeile zu vermeiden und außerdem um bei gewölbtem Druckwiderlager, d.h. einer sogenannten Druckwalze, stets auf der horizontalen Linie einer Schar von senkrechten Tangenten zu bleiben. Hierbei ist von Bedeutung, daß der Abstand des Druckkopfes von dem Druckwiderlager in Schrägstellung, z.B. bei Nadeldruckköpfen innerhalb des Nadelhubes liegen muß, d.h. ca. 0,2 bis 0,4 mm betragen muß.

Die bisher verwendeten Paralleleinstellvorrichtungen (gemäß einem innerbetrieblichen Stand der Technik) sind aus parallel zur Seitenplatine verschiebbaren Achsaufnahmen (Achshaltern) gebildet. Die Einstellung solcher Achshalter ist insofern schwierig, als hier ein Maßstab für den Verstellweg fehlt und die Achshalter nach Gefühl verstellt werden müssen. Eine derartige Paralleleinstellung ist daher bei der Montage schwierig, zeitraubend und relativ unvollkommen.

Aus der JP-60-154 091 ist eine Einstellvorrichtung mit den Merkmalen des Oberbegriffs des Patentanspruchs 1 bekannt, wobei zwei Exzenter vorgesehen sind, von denen einer der Paralleleinstellung dient und der Mindestabstand durch den anderen Exzenter eingestellt wird. Ausgenutzt werden hierfür die Horizontal-Exzentrizitäten.

Der Erfindung liegt die Aufgabe zugrunde, eine einfachere und genauer arbeitende Lösung zu finden, die auf einstellbaren und meßbaren Teilschritten beruht.

Die gestellte Aufgabe wird ausgehend voll der eingangs bezeichneten Paralleinstellvorrichtung erfindungsgemäß dadurch gelöst, daß die zu verstellende Achse die hintere Achse ist, und daß die Paralleleinstellung durch einseitiges Heben oder Senken justierbar ist. Die Exzenter ermöglichen eine genaue Einstellung, wobei deren Drehung für die Einstellung bei der Montage um einzelne Drehschritte als Maß für den Einstellweg genommen wird.

Die Vorrichtung ist außerdem leicht herstellbar, indem der Exzenter ein Lager für die Schlittenführungsachse bildet und daß das Lager als Ring mit exzentrisch zur Ringachse angeordneter Bohrung ausgebildet ist.

Ferner wird vorgeschlagen, daß der Ring gegenüber der Seitenplatine über den Außenumfang festlegbar ist. Hierbei ist nur eine entsprechend bemessene Öffnung in der Seitenplatine erforderlich.

Nach einer weiteren Verbesserung hinsichtlich der Lagerung des Ringes und der genauen Einstellbarkeit des Exzenters ist vorgesehen, daß der Ringschaft eine Verzahnung trägt, deren Zähne in die Zahnlücken einer Gegenverzahnung der Seitenplatine greifen.

Ein Ausführungsbeispiel der Erfindung ist in der Zeichnung dargestellt und wird nachfolgend beschrieben. Es zeigen:

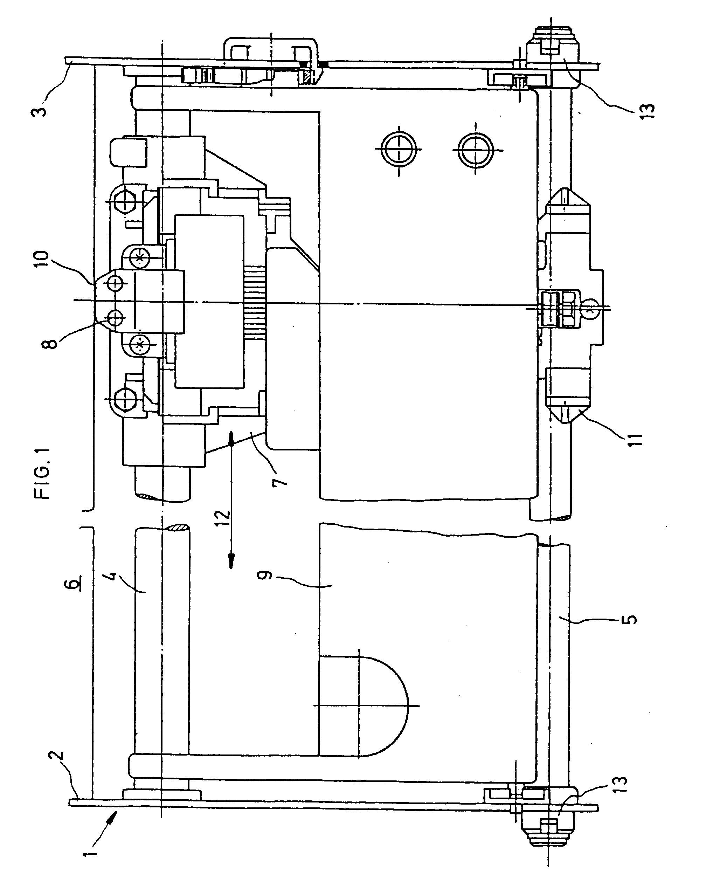

- Fig. 1: eine Draufsicht auf einen Matrixdrucker bei abgenommenem Gehäuse mit der Paralleleinstellvorrichtung,
- Fig. 2: eine Seitenansicht auf die Druckkopfschlittenführung im Teilschnitt,
- Fig. 3: einen Längsschnitt durch die Lagerung der hinteren Schlittenführungsachse und
- Fig. 4: einen Teilquerschnitt durch die Lagerung der hinteren Schlittenführungsachse.

Der Matrixdrucker-Rahmen 1 besteht aus den zwei Seitenplatinen 2 und 3, zwischen denen eine vordere Schlittenführungsachse 4 und eine hintere Schlittenführungsachse 5 verlaufen. Im Bereich der vorderen Schlittenführungsachse 4 liegt in einer höheren Mittelachsenebene ein Druckwiderlager 6. Auf den Schlittenführungsachsen 4 und 5 ist ein Druckkopfschlitten 7 geführt, auf dem sich ein Druckkopf 8 befindet, der genau parallel zum Druckwiderlager 6 bewegt wird. Zwischen den Seitenplatinen 2 und 3 liegt außerdem eine Farbbandkassette 9, von der ein Farbband in den Spalt 10 zwischen dem Druckkopf 8 und dem Druckwiderlager 6 im Kreislauf bewegt wird. Der Druckkopf 8 muß daher in sehr genauem und gleich großem Abstand zu dem Druckwiderlager 6 in dem Bereich zwischen den Seitenplatinen 2 und 3 stehen.

Der Druckkopfschlitten 7 ist auf der vorderen Schlittenführungsachse 4 in einem radial genau führenden Lager 4a gelagert, währenddem die hintere Schlittenführungsachse 5 in einer dem Druckwiderlager 6 zugewandten Gabel 11 gelagert ist, die eine Verlagerung nur quer zur Schlittenführungsrichtung 12 gestattet. In etwa vertikaler Richtung ist die hintere Schlittenführungsachse 5 innerhalb der Gabel 11 weitestgehend spielfrei geführt.

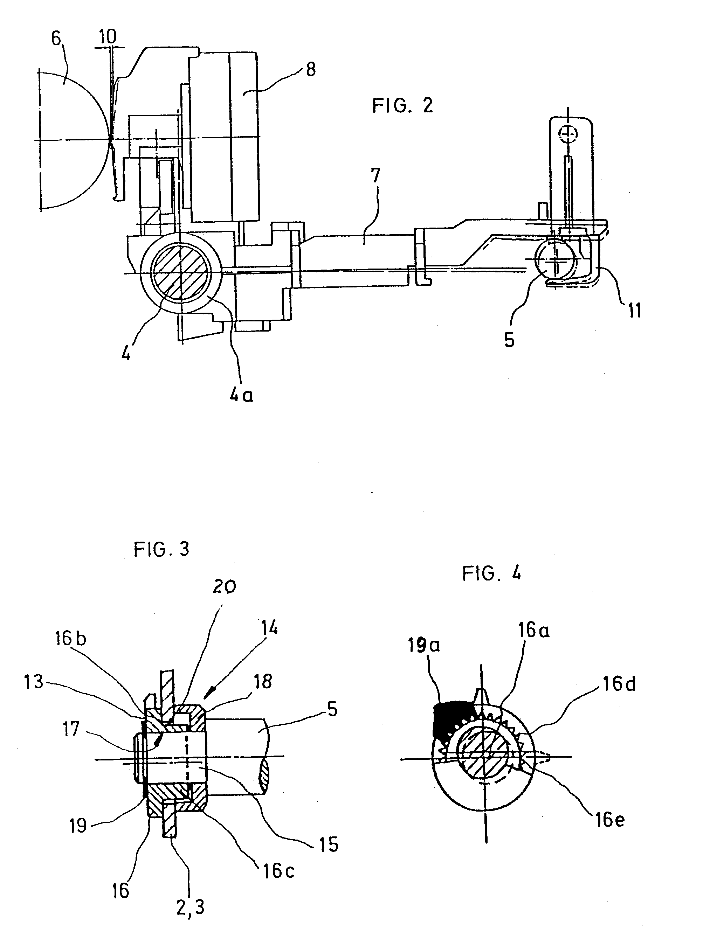

Die hintere Schlittenführungsachse 5 lagert in den beiden Seitenplatinen 2 und 3 in Exzentern 13. Der Exzenter 13 bildet jeweils ein Lager 14 (Fig. 3) in den Seitenplatinen 2 bzw. 3. Hierbei ruht der Achszapfen 15 in einem Ring 16 mit exzentrisch zur Ringachse 16a angeordneter Bohrung 17 für den Achszapfen 15. Ein Innenring 18 und ein Axialfederring 19 legen die Schlittenführungsachse 5 gegenüber den Seitenplatinen 2 und 3 fest.

Die eingestellte Exzentrizität des Ringes 16 wird durch eine Verbindung zwischen dem Außenumfang 16b des Ringes 16 und der kreisrunden Öffnung in den Seitenplatinen 2 bzw. 3 festgelegt. Eine besonders vorteilhafte Ausbildung ergibt sich (Fig. 3 und 4), wenn der Ringschaft 16c eine Verzahnung 16d trägt, deren Zähne 16e in Zahnlücken 19a einer Gegenverzahnung 20 einer der Seitenplatinen 2 oder 3 greifen.

Beim Paralleleinstellen des Druckkopfschlittens 7 zu dem Druckkopf 8 zur Oberfläche des Druckwiderlagers 6 wird einer der beiden Exzenter 13 oder beide je nach Bedarf verstellt.

## Patentansprüche

1. Paralleleinstellvorrichtung für eine Druckkopfschlittenführung zu einem Druckwiderlager (6) in Druckern, insbesondere in Matrixdruckern, wobei die Druckkopfschlittenführung aus einer am Druckerrahmen (1) hinteren Schlittenführungsachse (5) und einer dem Druckwiderlager (6) gegenüberliegenden, auf einen Mindestabstand eingestellten vorderen Schlittenführungsachse (4) besteht und die hintere und die vordere Schlittenführungsachse (4, 5) jeweils in den Seitenplatinen (2, 3) des Druckerrahmens (1) mittels Exzentern (13) gelagert sind und das Druckwiderlager (6) auf eine zur vorderen Schlittenführungsachse (4) unterschiedlichen Höhenlage angeordnet ist und wobei die Paralleleinstellung zwischen Druckwiderlager (6) und Druckkopfschlittenführung durch einseitiges Verstellen der verstellbaren Schlittenführungsachse justierbar ist,
**dadurch gekennzeichnet,**
daß die zu verstellende Achse die hintere Achse (5) ist und daß die Paralleleinstellung durch einseitiges Heben und Senken justierbar ist.

2. Paralleleinstellvorrichtung nach Anspruch 1,
dadurch gekennzeichnet,
daß der Exzenter (13) ein Lager (14) für die Schlittenführungsachse (4 bzw. 5) bildet und daß das Lager (14) als Ring (16) mit exzentrisch zur Ringachse (16a) angeordneter Bohrung (17) ausgebildet ist.

3. Paralleleinstellvorrichtung nach den Ansprüchen 1 und 2,
dadurch gekennzeichnet,
daß der Ring (16) gegenüber der Seitenplatine (2,3) über den Außenumfang (16b) festlegbar ist.

4. Paralleleinstellvorrichtung nach den Ansprüchen 1 bis 3,
dadurch gekennzeichnet,
daß der Ringschaft (16c) eine Verzahnung (16d) trägt, deren Zähne (16e) in die Zahnlücken (19a) einer Gegenverzahnung (20) der Seitenplatine (2,3) greifen.

## Claims

1. A parallel alignment device for a print head carriage guide relative to a print counter-surface (6) in printers, in particular in matrix printers, in which the print head carriage guide consists of a carriage guide spindle (5) at the rear on the printer frame (1) and a front carriage guide spindle (4) located opposite the print counter-surface (6) and set to a minimum distance and the rear and the front carriage guide spindles (4, 5) are each mounted in the side plates (2, 3) of the printer frame (1) by means of eccentrics (13) and the print counter-surface (6) is located in a vertical position different from the front carriage guide spindle (4) and in which the parallel alignment between print counter-surface (6) and print head carriage guide is adjustable by unilateral adjustment of the adjustable carriage guide spindle,
characterised in that
the spindle which is to be adjusted is the rear spindle (5) and that the parallel alignment can be adjusted by unilateral raising and lowering.

2. A parallel alignment device according to Claim 1, characterised in that the eccentric (13) forms a bearing (14) for the carriage guide spindle (4 or 5) and that the bearing (14) is designed as a ring (16) with a bore (17) arranged eccentrically to the ring axis (16a).

3. A parallel alignment device according to Claims 1 and 2, characterised in that the ring (16) can be fixed relative to the side plate (2, 3) via the outer periphery (16b).

4. A parallel alignment device according to Claims 1 to 3, characterised in that the ring shank (16c) bears a set of teeth (16d), the teeth (16e) of which engage in the tooth spaces (19a) of counter-teeth (20) of the side plate (2, 3).

## Revendications

1. Dispositif de réglage parallèle pour un guide du chariot de la tête d'impression par rapport à une butée (6) dans des imprimantes, en particulier dans des imprimantes à matrice, le guide du chariot de la tête d'impression étant constitué d'un axe arrière (5) sur le bâti (1) de l'imprimante et d'un axe avant (4) opposé à la butée (6) et réglé à un écartement minimal, et les axes avant (4) et arrière (5) étant montés, à chaque fois, dans les platines latérales (2,3) du bâti (1) de l'imprimante au moyen d'excentriques (13), et la butée (6) étant agencée à une hauteur différente par rapport à l'axe avant (4), et le réglage parallèle entre la butée (6) et le guide du chariot de la tête d'impression pouvant être ajusté par le réglage unilatéral de l'axe réglable du guide du chariot,
caractérisé en ce que l'axe à régler est l'axe arrière (5), et en ce que le réglage parallèle peut être ajusté par soulèvement et abaissement d'un côté.

2. Dispositif de réglage parallèle selon la revendication 1,
caractérisé en ce que l'excentrique (13) forme un palier (14) pour l'axe (4 ou 5) du guide du chariot, et en ce que le palier (14) est réalisé en tant que bague (16) ayant un perçage (17) agencé excentriquement par rapport à l'axe (16a) de la bague.

3. Dispositif de réglage parallèle selon les revendications 1 et 2,
caractérisé en ce que la bague (16) peut être fixée par rapport à la platine latérale (2,3) sur sa périphérie externe (16b).

4. Dispositif de réglage parallèle selon les revendications 1 à 3,
caractérisé en ce que l'arbre (16c) de la bague porte une denture (16d), dont les dents (16e) s'engagent dans les entredents (19a) d'une contre-denture (20) de la platine latérale (2,3).
